(19) **Europäisches Patentamt European Patent Office Office européen des brevets**

(11) **EP 2 946 671 B1**

(12) **EUROPEAN PATENT SPECIFICATION**

(45) Date of publication and mention of the grant of the patent:
**13.05.2020 Bulletin 2020/20**

(51) Int Cl.:
*C08L 29/10* (2006.01)   *A23G 4/06* (2006.01)
*A23G 4/08* (2006.01)

(21) Application number: **15172853.2**

(22) Date of filing: **17.01.2012**

(54) **HYDROPHILIC GUM BASE**

HYDROPHILE KAUGUMMIGRUNDMASSE

BASE DE GOMME HYDROPHILE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.01.2011 GB 201100790**
**15.02.2011 US 201161443005 P**

(43) Date of publication of application:
**25.11.2015 Bulletin 2015/48**

(62) Document number(s) of the earlier application(s) in accordance with Art. 76 EPC:
**12701968.5 / 2 665 369**

(73) Proprietor: **Intercontinental Great Brands LLC**
**East Hanover, NJ 07936 (US)**

(72) Inventors:
• **Street, Graham T.**
  **Reading, Berkshire RG1 2NH (GB)**
• **Harris, Lawrence W.**
  **Reading, Berkshire RG30 4QW (GB)**

(74) Representative: **Wilson Gunn**
**Charles House**
**148/9 Great Charles Street**
**Birmingham B3 3HT (GB)**

(56) References cited:
**WO-A1-2008/103816    WO-A1-2008/145120**
**WO-A1-2010/149334    WO-A2-2010/125342**
**US-A1- 2008 233 233**

EP 2 946 671 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Field of the Invention

The present invention relates to a chewing gum base for use in chewing gum compositions wherein the chewing gum base contributes to the ability of the chewing gum compositions and chewing gum products to degrade over time after chewing by imparting the chewing gum with increased hydrophilic properties. Moreover, the invention relates to chewing gum compositions containing such chewing gum bases.

Background

Conventional chewing gum products are not environmentally-friendly. They can maintain stickiness during and after chewing and adhere to the ground or any other surface with which a gum product may come into contact, if care is not taken with regard to disposal of the gum product. This has been a problem for some time as used chewing gum which has been disposed of litters the streets, and is unsightly and a nuisance.

The stickiness of such conventional chewing gum products is derived, in a large part, from the use of elastomer solvents (i.e. resins) and other "tacky" ingredients (such as wax) during the manufacturing process.

In particular, conventional chewing gums manufactured using elastomer solvents exhibit a continuous or substantially continuous phase when chewed. As the continuous phase is characterized by an amorphous elastomer matrix containing sticky elastomer solvents, the gum bolus that results upon chewing is also sticky.

Many elastomers, and particularly high molecular weight elastomers (e.g. those with a molecular weight of 200,000 or greater), used in chewing gum compositions are usually solid at room temperature. They are usually purchased as blocks of solid material and generally require softening using solvents to be useful in chewing gum compositions. Softening elastomers in the absence of elastomer solvents is difficult, because the solid elastomer must still be processed into a continuous homogeneous and flowable mass to be useful in chewing gum compositions.

Although gum products that are manufactured without the use of elastomer solvents and/or other "tacky" ingredients have reportedly been developed, such gum products often rely on "non-conventional" gum ingredients to achieve desired properties. U.S. Patent No. 5,882,702, for example, obviates the need for elastomer solvents by replacing elastomers with a plasticized proteinaceous material such as zein. The incorporation of non-conventional ingredients in gum products, however, often compromises taste and thus can be undesirable from a consumer acceptability standpoint

US 2008/233233 discloses gum base and chewing gum compositions having non-stick or reduced-stick properties and/or increased degradability. These compositions include a terpolymer of methylvinyl ether, maleic anhydride and maleic acid.

WO 2008/103816 again discloses gum base and chewing gum compositions having non-stick or reduced-stick properties and/or increased degradability. The compositions including a terpolymer of methylvinyl ether, maleic anhydride.

Moreover, although gum products that allegedly do not stick to teeth and oral prosthetics during mastication are reported (see *e.g.* U.S. Patent No. 4,518,615), there nevertheless remains a need for chewing gum products that also exhibit reduced stickiness or non-stick properties upon disposal of the gum product subsequent to chewing. In particular, there remains a need for environmentally-friendly chewing gum boluses that exhibit either reduced stickiness to, or which do not stick to, or are rapidly degraded on, those surfaces where gum boluses that are improperly disposed of are often found (e.g. pavements, shoes, hair, undersides of tables and desks).

There was therefore a need for an environmentally-friendly chewing gum base that was capable of degrading in a relatively short period of time. Such gum bases have been made and comprise an elastomer and a component comprising hydrolysable units, such as products manufactured and sold under the Gantrez® brand name by International Speciality Products, which acts as an agent to degrade the elastomer in the gum base. The gum base is exposed to a condition that promotes hydrolysis, such as chewing. Upon hydrolysis, the surface of the gum base is hydrolysed, rendering it more hydrophilic, thereby reducing the stickiness of the chewing gum and/or rendering the chewing gum more degradable.

US 2007104829 discloses gum base compositions and chewing gum compositions having non stick or reduced-stick properties and/or increased degradability.

While the use of hydrolysable units in gum has been proven to provide a degradable gum, it is desirable to further increase the efficacy and speed at which the gum degrades.

Summary of the Invention

Therefore, in accordance with the present invention there is provided a gum base comprising:a) a hydrophilic precursor component comprising hydrolysable units; and b) a copolymer of a hydrophilic monomer with a second monomer selected from vinyl acetate, isobutylene, isoprene, butyl rubber or styrene butadiene, wherein the hydrophilic monomer is one or more selected from acrylic acid, methacrylic acid, ethylene glycol methacrylate, N,N-dimethylacrylamide, 2-hydroxyethyl acrylate, acrylamide, N-isopropylacrylamide, 2-(dimethylamino)ethyl methacrylate, 2-acrylamido-2-methylpropane sulfonic acid, ethylene oxide, ethylene glycol and propylene glycol; wherein the hydrophilic precursor component is at least partially encapsulated or dispersed within a barrier material; and
wherein the barrier material comprises a substance which possesses a nucleophilic group capable of reacting with the hydrolysable units of the hydrophilic precursor component.

Conventional chewing gum bases comprise a mixture of elastomers such as polyvinyl acetate (PVAc), polyisobutylene, butyl rubber (a copolymer itself of isobutylene and isoprene, typically containing about 2 wt.% of isoprene) or styrene butadiene. However, it has been found that the degradation properties of a gum base can be significantly improved by using a copolymer of a hydrophilic monomer with the respective monomers of these elastomers, rather than the elastomers alone.

The hydrophilic monomer is one or more selected from, acrylic acid, methacrylic acid, ethylene glycol methacrylate, N,N-dimethylacrylamide, 2-hydroxyethyl acrylate, acrylamide, N-isopropylacrylamide, 2-(dimethylamino)ethyl methacrylate, 2-acrylamido-2-methylpropane sulfonic acid, ethylene oxide, ethylene glycol and propylene glycol.

According to a further embodiment of the invention, the hydrophilic monomer is one or more selected from, acrylic acid, methacrylic acid, ethylene glycol methacrylate, N,N-dimethylacrylamide, 2-hydroxyethyl acrylate, acrylamide, N-isopropylacrylamide, 2-(dimethylamino)ethyl methacrylate, and 2-acrylamido-2-methylpropane sulfonic acid.

Typically, levels of between about 1-95% of the hydrophilic monomer by weight of the subsequently formed copolymer would be suitable. More typically, levels of between about 5-60% of the hydrophilic monomer, still more typically between about 10-50%, still more typically between about 15-40%, by weight of the subsequently formed copolymer, would be used.

The inclusion of a hydrophilic co-monomer into the polymerisation reaction imparts an increased degree of hydrophilicity on the final copolymer chain. This change in hydrophilicity will be dependent on the actual amount of the hydrophilic co-monomer included. However, it is this increase in hydrophilicity of the gum base which enhances the degradation efficiency for the gum bolus. Typically, the hydrophilic co-monomer is present in an amount of about 1-25% by weight of the final product, more typically from about 3-15% by weight.

The hydrophilic monomer used in the invention has a degree of hydrophilicity which is greater than that of the elastomer (polyvinyl acetate, polyisobutylene, butyl rubber or styrene butadiene) it is being copolymerised with, in order to increase the hydrophilic properties of the gum base relative to a gum base which contains one of polyvinyl acetate, polyisobutylene, butyl rubber or styrene butadiene alone as the primary polymeric component of the gum base.

According to a further embodiment of the invention, the structure of the copolymer may either be a graft, block, comb or a random copolymer.

According to a further embodiment of the invention, the hydrophilic precursor component comprises a polymer or a salt thereof. More than one hydrophilic precursor component may be used.

According to another embodiment of the invention, the hydrophilic precursor polymer may be selected from a copolymer of methyl vinyl ether and maleic anhydride and/or a salt thereof, copolymers of polystyrene and maleic anhydride and/or a salt thereof; a copolymer of a hydrophobic monomer and an acid anhydride monomer; polyimides such as polysuccinimide and/or a salt thereof, and combinations thereof, copolymers of vinyl pyrrolidone and vinyl acetate and/or a salt thereof, and alginates and/or a salt thereof. It will be understood that any combination of hydrophilic precursor components and their salts (whether formed before or after formulation) may be used in the present invention.

According to one embodiment of the invention, typical copolymers of methyl vinyl ether and maleic anhydride and/or salts thereof include any of the GANTREZ® AN products and/or salts thereof.

Examples of GANTREZ® AN products which may be used in accordance with the invention, include but are not limited to, GANTREZ® AN-119 (which has a molecular weight of about 200,000), GANTREZ® AN-903 (which has a molecular weight of about 800,000), GANTREZ® AN-139 (which has a molecular weight of about 1,000,000), and GANTREZ® AN-169 (which has a molecular weight of about 2,000,000). All of these materials are available from International Specialty Products (ISP).

It will also be understood that references to GANTREZ® products also relate to identical or equivalent unbranded compounds produced by other manufacturers.

According to one embodiment of the invention, a typical copolymer of vinyl pyrrolidone and vinyl acetate and/or salts thereof is PLASDONE® S-630 (which has a molecular weight of about 27,000), available from International Specialty Products, and/or salts thereof. Other suitable polymers for use as hydrophilic precursor components, including the aforementioned GANTREZ® products, are more particularly described in "Polymers for Oral Care: Product and Applications Guide", by International Specialty Products (©2003 ISP), the contents of which are incorporated herein by reference. Any of the aforementioned polymers and/or any salts thereof may be used alone or in combination.

According to another embodiment of the invention, typical salts of the hydrophilic precursor component include, but are not limited to, any alkali metal salt and/or any alkaline earth metal salt of a hydrophilic precursor component and/or combinations thereof. Particularly useful alkali metal salts include, but are not limited to, the sodium and potassium salts and/or combinations thereof. Particularly useful alkaline earth metal salts of hydrophilic precursor components include, but are not limited to, the magnesium and calcium salts and/or combinations thereof. One typical polymer is GANTREZ® MS, which is a mixed sodium and calcium salt of GANTREZ® S-97, both of which are available from International Specialty Products. Another typical GANTREZ® MS polymer is GANTREZ® MS 995 (which has a molecular weight of about 1,000,000), which also is available from International Specialty Products.

Detailed Description

The hydrophilic precursor component may have any suitable molecular weight and/or it may have any suitable particle size. Suitable molecular weights and particle sizes will be readily apparent to the person skilled in the art. Typical molecular weights range from about 200,000 to about 5,000,000, and more typically from about 900,000 to about 5,000,000.

In general, the at least one agent capable of degrading an elastomer, *i.e.* the hydrophilic precursor component, is present in an amount sufficient to substantially degrade the chewing gum product subsequent to mastication over time. Typically, in some embodiments, the hydrophilic precursor component is present in an amount sufficient to substantially degrade the chewing gum product subsequent to mastication within about 8 weeks. It will be apparent that the degradation times will be reduced when the chewing gum is subjected to optimum environmental conditions; in such optimum conditions the degradation time could be as little as about a week.

Typically, a hydrophilic precursor component is present in a chewing gum composition in an amount sufficient to impart reduced stickiness or non-stickiness to the gum base and/or to promote breakdown of the gum base within days and, more typically, within hours upon exposure to a condition that promotes hydrolysis. It is particularly useful to incorporate a hydrophilic precursor component in the gum bases in an amount that is from about 0.1% by weight to about 10% by weight of the total gum base. More typically, a hydrophilic precursor component is present in the inventive gum bases in an amount that is from about 1% by weight to about 5% by weight. Most typically, a hydrophilic precursor component is present in the inventive gum bases in an amount that is about 5% by weight. As a weight percentage of the overall chewing gum composition, the hydrophilic precursor component is typically present in an amount of about 0.25 to about 4% by weight, more typically from about 0.5 to about 3% by weight, still more typically from about 1.0 to about 2% by weight, most typically about 1.5% by weight.

By way of illustration of the invention, when a chewing gum comprising the gum base of the invention is chewed and deposited onto a surface, the anhydride functional groups in the Gantrez® component are converted to the acid form by hydrolysis caused by the chewing. This causes the Gantrez® to absorb water and form a hydrogel. This hydrogel then disrupts the surrounding gum matrix, causing it to become less cohesive and more easily removed by abrasive forces.

However, the present inventors have discovered that the rate of formation of the hydrogel, and hence the rate of chewing gum cud degradation, is independent of the concentration of the hydrophilic precursor component, and is even not significantly limited by the amount of available water. Rather, it is the rate of water ingress into the cud that is the predominant limiting factor in cud degradation.

Therefore, based upon this premise, increasing the hydrophilic nature of the gum base increases the rate of moisture ingress, therefore increasing the efficacy of the cud degradation. This can be achieved by increasing the hydrophilicity of the gum base elastomer.

Any of PVAc, polyisobutylene, butyl rubber or styrene butadiene can be used as the base polymer for the modified elastomer in the gum base of the invention, by compolymerisation with any of the monomer mentioned hereinabove. However, as PVAc is the most easily modified, reference will be made herein to this for convenience only for the purposes of illustrating the invention. This is of course not to be taken in any way as limiting upon the scope of the invention.

Of course, the modified copolymer elastomer can be prepared by copolymerisation of the hydrophilic monomer with the respective second monomer.

Simple hydrolysis converts the acetate functional groups in PVAc to alcohol, producing PVA, which is more hydrophilic than PVAc. PVAc/PVA co-polymers are widely commercially available, are well understood as a class of materials and have extensive use in food contact applications.

Due to the crystalline nature of PVA, polymers with less than about 50% hydrolysis are recommended for inclusion into gum base for processing reasons.

In addition to promoting the fragmentation of a chewing gum composition upon exposure to a condition that promotes hydrolysis, the use of a hydrophilic precursor component is beneficial from an organoleptic perspective. In particular, by using the hydrophilic precursor component, it is possible to delay the onset of the hydrophilic character of the gum, thereby enabling the gum to have a perceived texture during mastication.

According to a further embodiment of the invention, the gum base may also comprise a quantity of an unmodified elastomer component. Typically, the unmodified elastomer component is present in the final gum product in an amount of from about 5-30% by weight, more typically from about 15-20% by weight.

The hydrophilic precursor component comprising hydrolysable units is at least partially encapsulated or dispersed in a barrier material. This encapsulation or dispersion can help to improve the shelf life of the product. This is believed to improve the shelf life of the composition still further as the hydrophilic precursor component is protected further from exposure to environmental factors.

As used herein, the term "barrier material" refers to a material which acts to protect the hydrolysable units of the hydrophilic precursor component from exposure to moisture during storage. The hydrolysable units thus remain unreacted while the gum product is sat on a shelf so that they are still available for their purpose of degrading the gum once they have been exposed to conditions of hydrolysis and the gum has been chewed.

According to one embodiment of the invention, typical barrier materials include, but are not limited to, oils and fats, as well as hydrogenates and emulsions (such as water-in-oil or oil-in-water emulsions) thereof. Exemplary barrier materials include, but are not limited to, hydrogenated rape seed oil (HRSO), hydrogenated palm oil, HRSO with Carnauba wax, hydrogenated palm oil with Carnauba wax, polyvinyl acetate (PVAc), corn syrup, gum acacia hydrocolloids (including natural gums, such as gum arabic), polysaccharides, polymers (including polyethylene, polyvinyl acetate, polyvinyl laurate, polyvinyl stearate, vinylacetate-vinyllaurate copolymer), shellac, protein and an emulsion of vegetable oil and maltodextrin. If desired, a processing aid may be included with the barrier material. Such processing aids may include sugars, polyols, plasticizers or fillers.

The barrier material comprises a substance which possesses a nucleophilic group able to react with the hydrolysable units of the hydrophilic precursor component. In this embodiment, the amount of hydrophilic precursor component in the gum base is typically greater than in the embodiment where the barrier material does not contain any nucleophilic group capable of reacting with the hydrophilic precursor component. The barrier material then reacts with the outer portion of the hydrophilic precursor component only, thus effectively providing a further protective barrier layer between the hydrolysable units in the hydrophilic precursor component and the atmosphere.

In general, the elastomer employed in the gum base may have a weight average molecular weight of at least about 200,000. Typically, the elastomer employed in the gum base has a weight average molecular weight from about 200,000 to about 2,000,000.

The amount of elastomer employed in the gum base may vary depending upon various factors such as the type of gum base used, the consistency of the gum composition desired and the other components used in the composition to make the final chewing gum product. In general, the elastomer may be present in the gum base in an amount from about 1% to about 30% by weight of the gum base. Typically, the elastomer is present in an amount from about 2% to about 15% by weight of the gum base. More typically, the elastomer is present in the gum base in an amount from about 3% to about 10% by weight of the gum base. In some embodiments, the elastomer will be present in the gum base in an amount from about 10% to about 60% by weight, typically from about 35% to about 40% by weight.

As used herein, any reference to a gum composition may include both of a chewing gum composition or a bubble gum composition.

As used herein, the term "degradation" refers to any process whereby a deposited gum cud becomes brittle and begins to breakdown into particles and/or becomes less cohesive and breaks in to pieces and/or becomes less adhesive, either by the effect of environmental factors including weather conditions such as rain, sun, frost, etc., including cycling weather conditions, and/or by the effect of cleaning processes including the action of detergents. Moreover, as used herein, the term "degradable" refers to the tendency of a deposited gum cud to break up in the environment due the effect of weather conditions (rain, sun, frost, etc.), and/or through the action of cleaning processes and/or detergents.

As used herein, the phrase "hydrophilic precursor component(s)" refers to any component(s) that is/are capable of promoting hydrolysis and which also has hydrophobic character. Although the hydrophilic precursor component contains a hydrophilic portion (or hydrophilic portions) which allow it to attract water and promote hydrolysis, at least a significant portion of the component is hydrophobic, which allows the component to be readily dispersed in a gum base, and which imparts an overall hydrophobic character.

Moreover, it will be understood that the term hydrophilic precursor component(s) includes hydrophilic precursor component(s) and salts thereof, whether such salts are formed before or after formulation, and any combination thereof Hydrophilic precursor components include, for example, any component that is capable of hydrolysing during mastication to promote the breakdown of a chewing gum composition and/or to reduce adhesion of a chewing gum composition to a surface, including salts of such components, whether formed before or after formulation. As such, hydrophilic precursor components include any component having at least one hydrolysable unit, including salts of components having at least one hydrolysable unit. Typical salts of components having at least one hydrolysable unit include, for example, alkali metal salts of components having at least one hydrolysable unit and alkaline earth metal salts of components having at least one hydrolysable unit.

As used herein, the term "hydrolysable units" refers to any portion of a molecule that is capable of being hydrolysed. Examples of hydrolysable units include, for example, ester bonds, ether bonds and anhydride bonds.

As used herein, the phrase "condition that promotes hydrolysis" refers to any condition that causes the hydrolysis of at least one hydrolysable unit. Such conditions include, for example, moisture, mastication in the mouth, and exposure to a hydrolysis-promoting component, and exposure to weather conditions of rain and sunlight.

As used herein, the term "hydrolysis-promoting component" refers to any component that promotes the hydrolysis of a hydrolysable unit. Such components include, for example, any alkaline component having a pH from about 8 to about 14. Examples of hydrolysis-promoting components include, for example, detergents having a basic pH, saliva, rain water, and deionised water. In some embodiments, hydrolysis-promoting components may include filler components such as talc, carbonate-based fillers, such as calcium carbonate, and dical.

As used herein, the term "non-stick and/or increased degradability inducing component(s)" refers to components that are incorporated in a gum composition such that the gum composition exhibits reduced stickiness and/or increased degradability as compared to the same gum composition in the absence of the non-stick inducing components. It will be understood that the term "non-stick and/or increased degradability inducing component(s)" includes non-stick inducing component(s), increased degradability inducing component(s), and component(s) that act both as a non-stick inducing agent and as an increased degradability inducing component. It will be further understood that in some embodiments, the non-stick inducing component may be the same as the increased degradability inducing component, and in some embodiments it may be different.

Typically, the non-stick and/or increased degradability inducing components have a number of advantages, including facilitating the softening of solid elastomer components in the production of a gum base as well as preventing or reducing the tendency of chewing gum compositions and products made therefrom from sticking to surfaces such as packages, teeth, oral prosthetics such as implants and dentures, as well as to concrete, stone, plastic, wood, pavement, brick, glass and various other similar surfaces. The non-stick and/or increased degradability inducing component may be any component that is capable of hydrolysing during mastication to promote breakdown of a chewing gum composition and/or to reduce adhesion of a chewing gum composition to a surface. Moreover, the non-stick and/or increased degradability inducing components may be any component that causes the final (as defined herein) Tg of an elastomer used in a chewing gum composition to change no more than about three degrees, up or down from the initial Tg (as defined herein) during processing. The non-stick and/or increased degradability inducing components also may be any components that serve as a release agent, as defined herein. Moreover, the non-stick and/or increased degradability inducing components may be any components that promote the degradation of a chewing gum composition. In particular, the non-stick and/or increased degradability inducing component may be any component that serves as a hydrophilic precursor component, as defined herein. Furthermore, the non-stick and/or increased degradability components may be any components that crystallize or form domain regions in the gum base elastomers. Additionally, the non-stick and/or increased degradability inducing components may be any components that have a hydrophobic portion and a hydrophilic portion, wherein the hydrophobic portion is capable of orienting inwardly within a gum bolus and the hydrophilic portion is capable of orienting outwardly within a gum bolus. Non-stick and/or increased degradability inducing components include, for example, oils and other fats that may be included in a gum composition in an amount sufficient to render the composition non-sticky, both during processing and after processing of a chewing gum subsequent to chewing of the gum products made therefrom. These non-stick and/or increased degradability inducing components may be used to replace some or all of the elastomer solvent materials, such as resins and waxes conventionally used in chewing gum compositions. The non-stick and/or increased degradability inducing components, when added to a gum base may also act as an elastomer processing aid to permit softening processing of the elastomer from a solid to a useful gum base material.

The chewing gum base containing the same will be less sticky or exhibit less stickiness and/or will exhibit enhanced degradability compared to a chewing gum base not including a non-stick and/or increased degradability inducing component.

The non-stick and/or increased degradability inducing component may be present in amounts of about 10% to about 60%, typically about 20% to about 50%, more typically about 30% to about 40%, by weight of the chewing gum base, typically about 20% to about 50%.

As used herein, the term "Tg" refers to the glass transition temperature of an elastomer used in chewing gum compositions as measured at any time before or after processing of the elastomer. More particularly, the term "Tg initial" refers to the glass transition temperature of an elastomer prior to processing of the elastomer into a substantially homogenous mass in the presence of a non-stick inducing component. The term "Tg final" refers to the glass transition temperature of an elastomer subsequent to processing of the elastomer into a softened mass useful for gum base.

Tg is generally understood to be the temperature below which molecules have very little mobility. On a larger scale, polymers are rigid and brittle below their glass transition temperature and can undergo plastic deformation above it. Tg is usually applicable to amorphous phases and is commonly applicable to glasses, plastics and rubbers. In polymers, Tg is often expressed as the temperature at which the Gibbs free energy is such that the activation energy for the cooperative movement of a significant portion of the polymer is exceeded. This allows molecular chains to slide past each other when a force is applied.

As used herein, the phrase "release properties" means properties that allow a chewing gum base and/or chewing gum product to exhibit reduced adherence to a surface.

As used herein, the phrase "limited capability to plasticize polymers" means that that a component will not change the Tg of a gum base more than about plus/minus three degrees upon incorporation of the component into the gum base.

As used herein, the term "processing" refers to any step taken during the manufacture of a gum base and/or chewing gum product, including any step that occurs when manufacturing a chewing gum product by means of batch systems, continuous systems, or any other system manufacturing system known in the art. As used herein, the term processing includes the process of "masticating an elastomer" so that it is suitable for inclusion in a chewing gum product.

As used herein, the phrase "non-conventional gum ingredients" refers to ingredients not conventionally included in chewing gum products and includes, for example, ingredients such as zein and seed oils from the plant genus Cuphea.

As used herein, the phrase "conventional gum ingredients" refers to ingredients traditionally included in chewing gum products such as elastomers and elastomer solvents.

As used herein, the term "surface", when used in connection with non-stick and/or degradable properties, refers to any surface with which a chewing gum base, chewing gum composition, chewing gum product or chewing gum bolus comes into contact. Such surfaces include without limitation, for example, the following: any surface in the oral cavity such as the surface of a tooth or the surface of any dental or orthodontic device contained in the oral cavity; any surface on a human body including the skin, such as the skin on the face, and hair; and any surface external to a human body, such as the surface of pavements, sidewalks, roadways, brick, glass, wood, plastic, stone, furniture, carpeting, clothing, the soles of footwear including shoes or sneakers, cardboard, paper, metal, and surfaces of porous nature to which conventional gum ingredients stick and are difficult to remove.

According to further embodiments of the invention, one or more further components may be added to the gum base as desired. These components include but are not limited to a solvent or softener for the elastomer; at least one component selected from a sweetener, a flavour, a sensate and combinations thereof; a texture-modifier; an emulsifier; a plasticizer, a filler/bulking agent; a wax; a hydrophilic, water-absorbing polymer; an antioxidant; a colouring agent; a preservative; photosensitizers; warming and tingling agents; throat-soothing agents; spices; herbs and herbal extracts, tooth-whitening agents; breath-freshening agents; vitamins and minerals; bioactive agents; caffeine; nicotine; or pharmaceutically active agents.

The use of one or more elastomer solvents is not required to masticate the elastomer during the manufacturing process. It may be present in limited amounts, but can lessen the non-stick properties of the gum base of the invention if used in amounts above about 5% by weight of the gum base. In certain embodiments of the invention, elastomer solvents may be used in amounts of about 4% to about 5% by weight of the gum base to provide non-stick properties which are sufficient to provide non-stick properties to teeth, dentures, oral implants and other oral prosthetics.

In some embodiments, the gum base may also contain less than conventional amounts of elastomer solvents to aid in softening the elastomer component. In particular, in some embodiments, such solvents are not required, but may be used in limited amounts along with the non-stick and/or degradability inducing components. By less than conventional amounts is meant that the elastomer solvent is employed in the gum base, for example, in amounts from about 0% to about 5.0% and typically from about 0.1% to about 3.0%, by weight, of the gum base. In some embodiments, the gum base includes a maximum of about 5.0% by weight of an elastomer solvent. In other embodiments, the gum base is free of added elastomer solvents.

In other embodiments, conventional amounts of elastomer solvents are incorporated in the gum bases to aid in softening the elastomer component. Elastomer solvents which may be used include those elastomer solvents known in the art, for example, terpinene resins such as polymers of alpha-pinene or beta-pinene, methyl, glycerol and pentaerythritol esters of rosins and modified rosins and gums such as hydrogenated, dimerized and polymerized rosins, and mixtures thereof. Further examples of elastomer solvents suitable for use herein may include the pentaerythritol ester of partially hydrogenated wood and gum rosin, the pentaerythritol ester of wood and gum rosin, the glycerol ester of wood rosin, the glycerol ester of partially dimerized wood and gum rosin, the glycerol ester of polymerized wood and gum rosin, the glycerol ester of tall oil rosin, the glycerol ester of wood and gum rosin and the partially hydrogenated wood and gum rosin and the partially hydrogenated methyl ester of wood and rosin, and the like, and mixtures thereof.

Typically, the incorporation of an elastomer solvent in the gum base does not interfere with the non-stick inducing components of the gum base and/or with the ability of the gum base to degrade. In particular, in some embodiments where non-stickiness or reduced stickiness is desired, the elastomer solvent typically softens the gum base without contributing to stickiness. Moreover, the Tg of the gum base typically does not change more than +/- three degrees upon incorporation of the elastomer solvent in the gum base in some embodiments where non-stickiness or reduced stickiness is desired.

Typically, a conventional amount of an elastomer solvent for use in the gum base of the invention may be an amount from about 2.0% to about 15%, more typically from about 5% by weight to about 15% by weight of the gum base, even more typically, in amounts from about 7% by weight of the gum base to about 11 % by weight of the gum base.

In some embodiments, the elastomer solvent employed may have at least one hydrophilic portion and at least one hydrophobic portion such that the hydrophilic portion orients inwardly within a gum base and such that the hydrophilic portion orients outwardly within a gum base made from elastomers. Suitable elastomer solvents having at least one hydrophilic portion and at least one hydrophobic portion include, for example, methyl ester liquid rosin. In some embodiments, it is especially useful to incorporate a methyl ester liquid rosin in relatively low amounts. Methyl ester liquid rosin interferes less with the non-stick and/or degradability inducing components as compared to other resins, but yet acts to increase softening of the gum base without contributing to increased stickiness when used in combination with the non-stick inducing component.

Typically, in some embodiments, a methyl ester liquid rosin is incorporated in a gum base in an amount from about 0.5% to about 5.0%, more typically from about 1.0% to about 3.0% by weight of the gum base.

Combinations of any two or more of these components may be used in the gum base of the invention as desired.

The gum base also may include an one or more components selected from, but not limited to, a sweetener, a flavour, a sensate and combinations thereof; a texture-modifier; a solvent or softener for the elastomer; an emulsifier; a plasticizer, a filler/bulking agent; a wax; a hydrophilic, a water-absorbing polymer; an antioxidant; a colouring agent; a preservative; a photosensitizer; a warming and/or tingling agent; a throat-soothing agent; a spice; a herb and/or herbal extract, a tooth-whitening agent; a breath-freshening agent; a vitamin and/or mineral; a bioactive agent; caffeine; nicotine; or a pharmaceutically active agent.

Any of the aforementioned additive components for use in a chewing gum composition, as well as other conventional additives known to one having ordinary skill in the art, such as thickeners, may be incorporated into the chewing gum base of the chewing gum compositions or any coating that the chewing gum product may contain.

Examples of each of these components will be readily apparent to a person skilled in the art of chewing gum manufacture, but such examples and their respective amounts in a chewing gum composition are also given in US 2007/104829 to Soper et al.

The hydrophilic precursor component having hydrolysable units and the barrier material may be any of those which have been previously detailed hereinabove for the gum base embodiment of the invention.

According to one embodiment of the invention, the hydrophilic precursor component having hydrolysable units typically comprises a copolymer of methyl vinyl ether and maleic anhydride or a salt thereof. The copolymer of methyl vinyl ether and maleic anhydride or a salt thereof is typically one which is currently sold under the Gantrez® trade name.

Also described herein is a method for preparing a gum base, comprising the steps of:

(a) providing at least one hydrophilic precursor component including hydrolysable units; and
(b) mixing the hydrophilic precursor component with a copolymer of a hydrophilic monomer with a second monomer selected from vinyl acetate, isobutylene, isoprene, butyl rubber or styrene butadiene, wherein the hydrophilic monomer is one or more selected from acrylic acid, methacrylic acid, ethylene glycol methacrylate, N,N-dimethylacrylamide, 2-hydroxyethyl acrylate, acrylamide, N-isopropylacrylamide, 2-(dimethylamino)ethyl methacrylate, 2-acrylamido-2-methylpropane sulfonic acid, ethylene oxide, ethylene glycol and propylene glycol;

wherein the hydrophilic precursor component is at least partially encapsulated or dispersed within a barrier material; and wherein the barrier material comprises a substance which possesses a nucleophilic group capable of reacting with the hydrolysable units of the hydrophilic precursor component.

The methods of making a chewing gum base may include providing at least one elastomer and mixing at least one non-stick and/or degradability inducing component with the elastomer to form a chewing gum base, wherein the at least one non-stick and/or degradability inducing component softens the elastomer without causing the chewing gum base to become sticky. In such embodiments, the chewing gum base has reduced stickiness in the presence of the non-stick and/or degradability inducing component as compared to in the absence of the non-stick and/or degradability inducing component.

Typically, the copolymerisation reactions are carried out in solution, rather than in emulsions due to the hydrophilic nature of the monomers. Further, due to the opposing hydrophilic and hydrophobic natures of the components of the copolymers, the solution is one which can solvate both components. Such suitable solvents include alcohols.

Also described herein is a method for preparing a chewing gum composition comprising the steps of:

(a) providing a gum base including (i) at least one hydrophilic precursor component including hydrolysable units; and (ii) a copolymer of a hydrophilic monomer with a second monomer selected from vinyl acetate, isobutylene, isoprene, butyl rubber or styrene butadiene wherein the hydrophilic monomer is one or more selected from acrylic acid, methacrylic acid, ethylene glycol methacrylate, N,N-dimethylacrylamide, 2-hydroxyethyl acrylate, acrylamide, N-isopropylacrylamide, 2-(dimethylamino)ethyl methacrylate, 2-acrylamido-2-methylpropane sulfonic acid, ethylene oxide, ethylene glycol and propylene glycol;
wherein the hydrophilic precursor component is at least partially encapsulated or dispersed within a barrier material; and

wherein the barrier material comprises a substance which possesses a nucleophilic group capable of reacting with the hydrolysable units of the hydrophilic precursor component.; and

(b) combining the gum base with at least one component selected from a sweetener, a flavour, a sensate, and combinations thereof.

Also described herein is a method of increasing the degradability of a chewing gum base or chewing gum composition comprising the steps of:

(a) providing a gum base or chewing gum composition including (i) at least one hydrophilic precursor component including hydrolysable units; and (ii) a copolymer of a hydrophilic monomer with a second monomer selected from vinyl acetate, isobutylene, isoprene, butyl rubber or styrene butadiene wherein the hydrophilic monomer is one or more selected from acrylic acid, methacrylic acid, ethylene glycol methacrylate, N,N-dimethylacrylamide, 2-hydroxyethyl acrylate, acrylamide, N-isopropylacrylamide, 2-(dimethylamino)ethyl methacrylate, 2-acrylamido-2-methylpropane sulfonic acid, ethylene oxide, ethylene glycol and propylene glycol;
wherein the hydrophilic precursor component is at least partially encapsulated or dispersed within a barrier material; and
wherein the barrier material comprises a substance which possesses a nucleophilic group capable of reacting with the hydrolysable units of the hydrophilic precursor component; and
(b) exposing the chewing gum base or chewing gum composition to mastication in the oral cavity of an individual; wherein at least one hydrolysable unit of the hydrophilic precursor component begins to hydrolyse or hydrolyses upon mastication in the oral cavity.

Also described herein is a method of increasing the degradability of a gum base or chewing gum composition, comprising the steps of:

a) providing a gum base or chewing gum composition including (i) at least one hydrophilic precursor component including hydrolysable units; and (ii) a copolymer of a hydrophilic monomer with a second monomer selected from vinyl acetate, isobutylene, isoprene, butyl rubber or styrene butadiene wherein the hydrophilic monomer is one or more selected from acrylic acid, methacrylic acid, ethylene glycol methacrylate, N,N-dimethylacrylamide, 2-hydroxyethyl acrylate, acrylamide, N-isopropylacrylamide, 2-(dimethylamino)ethyl methacrylate, 2-acrylamido-2-methylpropane sulfonic acid, ethylene oxide, ethylene glycol and propylene glycol;
wherein the hydrophilic precursor component is at least partially encapsulated or dispersed within a barrier material; and
wherein the barrier material comprises a substance which possesses a nucleophilic group capable of reacting with the hydrolysable units of the hydrophilic precursor component; and
(b) exposing the gum base or chewing gum composition to a source of water; wherein at least one hydrolysable unit of the polymer begins to hydrolyze or hydrolyzes upon contact with the water.

Also provided herein is a use of a gum base comprising (i) at least one hydrophilic precursor component including hydrolysable units; and (ii) a copolymer of a hydrophilic monomer with a second monomer selected from vinyl acetate, isobutylene, isoprene, butyl rubber or styrene butadiene, in improving the degradability of a gum base or chewing gum composition.

Typically, in the above methods, there is also a step of comprising providing a solvent or softener for the elastomer.

In some embodiments, a chewing gum base according to the invention may be incorporated in a chewing gum composition in an amount from about 5% to about 95%, more typically from about 28% to about 42%, and even more typically from about 28% to about 30% by weight of the total chewing gum composition. In the case of centre-filled chewing gum compositions, this weight percent may be based on the gum region rather than the centre-filled region.

The chewing gum compositions of the present invention may be formed into a variety of shapes and sizes and may take various product forms, including without limitation, sticks, slabs, chunks, balls, pillows, tablet, pellet, centre-filled, pressed tablet, deposited, compressed chewing gum or any other suitable format, as well as coated and uncoated forms.

When the chewing gum compositions are formed into coated products, the coating may be applied by any method known in the art. The coating composition may be present in an amount from about 2% to about 60%, more typically from about 25% to about 35%, or still more typically from about 25% to about 45%, and even more specifically, in an amount of about 30% by weight of the gum piece.

Such coated chewing gums are typically referred to as pellet gums. The outer coating may be hard or crunchy. Any suitable coating materials known to those skilled in the art may be employed. Typically, the outer coating may include sorbitol, maltitol, xylitol, isomalt, erythritol, isomalt, and other crystallisable polyols; sucrose may also be used. Furthermore, the coating may include several opaque layers, such that the chewing gum composition is not visible through the coating itself, which can optionally be covered with a further one or more transparent layers for aesthetic, textural and protective purposes. The outer coating may also contain small amounts of water and gum arabic. The coating can be further coated with wax. The coating may be applied in a conventional manner by successive applications of a coating solution, with drying in between each coat. As the coating dries it usually becomes opaque and is usually white, though other colorants may be added. A polyol coating can be further coated with wax. The coating can further include coloured flakes or speckles. If the composition includes a coating, it is possible that one or more oral care actives can be dispersed throughout the coating. This is especially typical if one or more oral care actives are incompatible in a single phase composition with another of the actives. Flavours may also be added to yield unique product characteristics.

In the case of centre-filled chewing gum products, the coating may also be formulated to assist with increasing the thermal stability of the gum piece and preventing leaking of the liquid fill. In some embodiments, the coating may include a gelatin composition. The gelatin composition may be added as a 40% by weight solution and may be present in the coating composition from about 5% to about 10% by weight of the coating composition, and more typically about 7% to about 8%. The gel strength of the gelatin may be from about 130 bloom to about 250 bloom.

Other materials may be added to the coating to achieve desired properties. These materials may include without limitations, cellulosics such as carboxymethyl cellulose, gelatin, pullulan, alginate, starch, carrageenan, xanthan gum, gum arabic and PVAc.

The coating composition may also include a pre-coating which is added to the individual gum pieces prior to an optional hard coating. The pre-coating may include an application of PVAc. This may be applied as a solution of PVAc in a solvent, such as ethyl alcohol. When an outer hard coating is desired, the PVAc application may be approximately 3% to 4% by weight of the total coating or about 1% of the total weight of the gum piece (including a liquid-fill, gum region and hard coating).

Methods of processing an elastomer for use in a gum base without substantially changing the Tg of the gum base as measured by differential scanning calorimetry (DSC) are described. Such methods include the step of mixing at least one elastomer and at least one fat.

Methods of processing a solid elastomer that include: providing a solid elastomer composition suitable for use in a chewing gum base and combining with the solid elastomer composition a non-stick and/or degradability inducing component including at least one fat having an HLB range of about 3.5 to about 13 are described. In such methods, the non-stick and/or degradability inducing component is present in amounts sufficient to permit mastication of the solid elastomer composition into a homogenous mass.

The above-described methods of processing an elastomer are carried out in the presence of very low amounts of elastomer solvent. In such embodiments, the elastomer solvent includes a maximum of about 5.0% of any gum base made by masticating an elastomer as described above.

The above-described methods of processing an elastomer are carried out in the absence of added elastomer solvent.

The methods of making a chewing gum base include processing an elastomer for use in a gum base without substantially changing the Tg of the gum base as measured by DSC by mixing at least one elastomer and at least one fat or oil.

Moreover, the methods of making a chewing gum base include providing a solid elastomer composition suitable for use in a chewing gum base and combining with the solid elastomer composition a non-stick and/or degradability inducing component that includes at least one fat or oil having an HLB range of about 3.5 to about 13. In such methods, the non-stick and/or degradability inducing component is present in amounts sufficient to permit processing of the solid elastomer composition into a softened, processable mass.

The above-described methods of making a gum base may be carried out in the presence of lower than conventional amounts of elastomer solvent. In such embodiments, the elastomer solvent includes a maximum of about 5.0% of the gum base. Typically, an elastomer solvent can be mixed with an elastomer and non-stick and/or degradability inducing component to soften the elastomer without causing the resultant chewing gum base to become sticky.

The above-described methods of making a gum base are carried out in the absence of added elastomer solvent.

The manner in which the gum base components are mixed is not critical and such mixing is performed using standard apparatuses known to those skilled in the art. In a typical method, at least one elastomer is admixed with at least one mastication processing aid, which for purposes of the invention includes one or more hydrophilic precursor component comprising hydrolysable units, and agitated for a period of from about 1 to about 30 minutes. The remaining ingredients, such as the texture-modifier and/or softener are then admixed, either in bulk or incrementally, while the gum base mixture is blended again for about 1 to about 30 minutes.

The products may be prepared using standard techniques and equipment known to those skilled in the art, which processes generally involve melting the gum base, incorporating the desired ingredients while mixing and forming the batch into individual chewing gum pieces. The apparatus useful in accordance with the embodiments described herein includes mixing and heating apparatuses well-known in the chewing gum manufacturing arts, and therefore the selection of the specific apparatus will be apparent to the artisan. For general chewing gum preparation processes which are useful in some embodiments see U.S. Patent Nos. 4,271,197 to Hopkins et al., 4,352,822 to Cherukuri et al. and 4,497,832 to Cherukuri et al.

For instance, centre-fill chewing gum embodiments may include a centre-fill region, which may be a liquid or powder or other solid, and a gum region. Some embodiments also may include an outer gum coating or shell, which typically provides a crunchiness to the piece when initially chewed. The outer coating or shell may at least partially surround the gum region. Centre-fill chewing gums and methods of preparing same are more fully described in assignee's co-pending U.S. patent application Ser. No. 10/925,822, filed on Aug. 24, 2004 and assignee's co-pending U.S. patent application Ser. No. 11/210,954, filed on Aug. 24, 2005, both entitled "Liquid-Filled Chewing Gum Composition".

Some other chewing gum embodiments may be in a compressed gum format, such as, for example, a pressed tablet gum. Such embodiments may include a particulate chewing gum base, which may include a compressible gum base composition and a tableting powder. Compressed chewing gums are more fully described in assignee's co-pending U.S. Provisional Application No. 60/734,680, filed on Nov. 8, 2005, and entitled "Compressible Gum System".

In some embodiments the gum base is also free of added waxes.

The features and advantages of the present invention are more fully shown by the following examples and Figures which are provided for purposes of illustration, and are not to be construed as limiting the invention in any way.

Brief Description of the Drawings

Figure 1 shows a scatter plot of a control sample containing a standard gum base with Gantrez against a sample containing PVA-containing gum base with Gantrez according to the invention.

Figures 2(a) and (b) show a visual comparison of the relative degradation of a sample of gum base according to the invention and a standard gum base not containing any PVAc-PVA copolymer, after 3 (Figure 2(a)) and 8 days (Figure 2(b)) exposure.

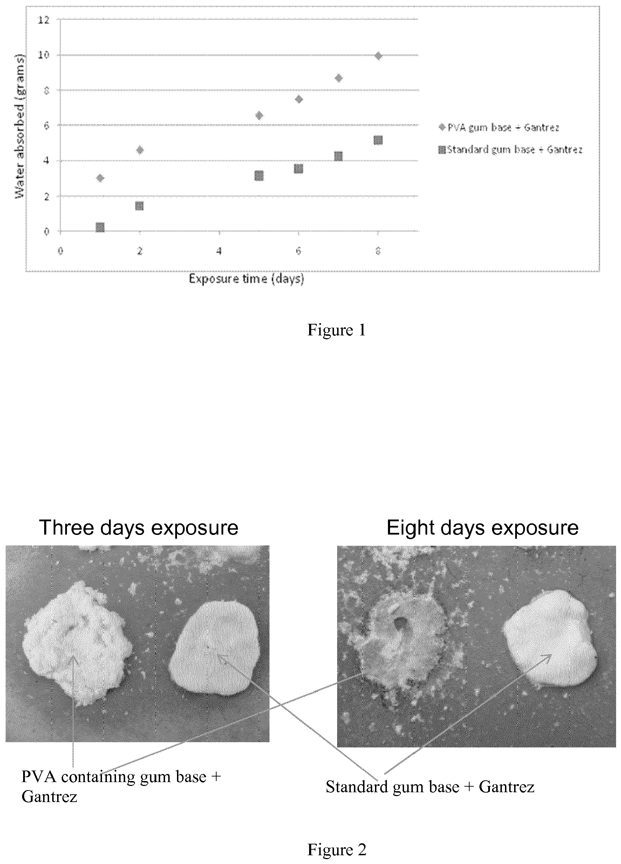

The graph in Figure 1 shows that by using the PVA in the gum base the level of water absorption is approximately double that of a standard gum base in combination with Gantrez, and that this trend is consistent over a number of days. This translates to a product that is will degrade more quickly under normal weather conditions.

Figures 2(a) and (b) illustrate visually what a jump in efficiency of 10% means in real terms for the degradation of a gum cud. A gum containing a PVAc-PVA copolymer and Gantrez was tested alongside a standard chewing gum containing Gantrez but no PVA. The results of the degradation are shown after 3 days and 8 days in Figures 2(a) and (b), respectively. It can be clearly seen that the PVAc-PVA copolymer-containing gum shows a significantly lower resilience to rainfall, showing near complete removal after as little as eight days exposure to outdoor conditions and with no exposure to foot traffic.

EXAMPLES

A standard chewing gum formulation was used, containing two gum base polymer compounds, A and B. All of the PVAc in the gum base polymer compound B was replaced with a PVA/PVAc co-polymer (gum base polymer compound B accounting for approximately 60% of the total gum base, with PVAc accounting for 18.85% of gum base polymer compound B). The gum contained 1.5% w/w Gantrez anhydride. The Gantrez was added as a 25% Gantrez anhydride loading encapsulate.

The gum was tested alongside a standard gum formulation - *i.e.* one containing no PVAc-PVA copolymer - also containing 1.5% w/w Gantrez anhydride using a water absorbance test. Chewed cuds were exposed to 10 g of water per day, and each day any excess water was drained off and the weight gain of the cud due to the water uptake was calculated. The test was run for 8 days.

The average rate of water uptake for 4 cuds containing no PVAc-PVA copolymer was 0.5 g/day. The average rate of water uptake for 4 cuds containing PVAc-PVA copolymer was 1.0 g/day.

The addition of PVAc-PVA copolymer to the gum base formulation has increased the rate of moisture ingress into the chewed Gantrez anhydride containing cud. It has also increased the maximum quantity of water absorbed by the cud. The gum formulation containing no PVAc-PVA copolymer absorbed a total of 4 g after 8 days of exposure (calculated over an average of 4 cuds); in comparison, the gum formulation containing PVAc-PVA copolymer absorbed 9g (also calculated over average of 4 cuds).

The increased rate of water uptake and final total water absorbance for the PVAc-PVA copolymer-containing formulation resulted in a more disrupted and easily broken down cud.

It can therefore be seen that the use of a more hydrophilic gum base allows water to more easily penetrate the cud and activate the Gantrez. It thus increases the efficacy of Gantrez anhydride by increasing its sensitivity to moisture. Less rainfall is therefore required to achieve the required level of efficacy for adequate degradation of the cud than is required for existing chewing gum bases. This makes the technology more robust towards real life conditions.

Table 1

|  | % efficiency | Days to reach 1 g | Amount of rain need per 1cm2* | Number of occurrences per year ** |
|---|---|---|---|---|
| Standard encapsulation | 10% | 1.5 | 3.3 | 5 |
| PVA containing gum base + encapsulation | 20% | 0.5 | 1.66 | 26 |

By standard encapsulation it is meant that the Gantrez is encapsulated in a core shell encapsulate where the shell makes up 75% by weight of the encapsulate and 25% Gantrez. The shell material is polyethylene wax (or equivalent material).
*Based on a gum cud with a surface area of 3cm$^2$
**Number of unbroken periods of rainfall where total rain matched amount needed per 1cm$^2$ based on figures for UK rainfall from the last 10 years

Table 1 shows that the inclusion of PVA-PVAc copolymer into a gum base rather than PVAc alone significantly increases the efficiency of the Gantrez in terms of total water absorbed and days of exposure needed to reach the efficacious level of 1 g of water absorbance.

$$\underline{\% \text{ efficiency}} = \text{amount water absorbed into gum} / \text{total water added to gum x } 100$$

Days to reach 1g = number of days of exposure to water before the gum cud has absorbed 1g
Amount of rain needed per 1cm$^2$ = based on efficiency and average cud size, the amount of rain needed before 1g of water could be absorbed
These results thus clearly demonstrate that the gum bases of the invention, with the hydrophilic precursor component together with the more hydrophilic elastomer, are capable of providing the improved degradation ability desired for the chewing gums.
It is of course to be understood that the present invention is not intended to be restricted to the foregoing examples which are described by way of example only.

**Claims**

1.    A gum base comprising:

a) a hydrophilic precursor component comprising hydrolysable units; and
b) a copolymer of a hydrophilic monomer with a second monomer selected from vinyl acetate, isobutylene, isoprene, butyl rubber or styrene butadiene, wherein the hydrophilic monomer is one or more selected from acrylic acid, methacrylic acid, ethylene glycol methacrylate, N,N-dimethylacrylamide, 2-hydroxyethyl acrylate, acrylamide, N-isopropylacrylamide, 2-(dimethylamino)ethyl methacrylate, 2-acrylamido-2-methylpropane sulfonic acid, ethylene oxide, ethylene glycol and propylene glycol; wherein the hydrophilic precursor component is at least partially encapsulated or dispersed within a barrier material; and
wherein the barrier material comprises a substance which possesses a nucleophilic group capable of reacting with the hydrolysable units of the hydrophilic precursor component.

2.    A gum base according to claim 1, wherein the hydrophilic precursor component having hydrolysable units is present in an amount from 0.1% by weight to 10% by weight of the total gum base.

3.    A gum base according to claim 1 or 2, wherein the copolymer is present in amount of 3% by weight to 95% by weight of the total composition.

4. A gum base according to any preceding claim, further including at least one component selected from a sweetener, a flavour, a sensate and combinations thereof; a texture-modifier; a solvent or softener for the elastomer; an emulsifier; a plasticizer, a filler/bulking agent; a wax; a hydrophilic, a water-absorbing polymer; an antioxidant; a colouring agent; a preservative; a photosensitizer; a warming and/or tingling agent; a throat-soothing agent; a spice; a herb and/or herbal extract, a tooth-whitening agent; a breath-freshening agent; a vitamin and/or mineral; a bioactive agent; caffeine; nicotine; a pharmaceutically active agent.

5. A gum base according to any preceding claim, further including at least one component which promotes hydrolysis, wherein the gum base degrades faster in the presence of the at least one component that promotes hydrolysis than in the absence of the at least one component that promotes hydrolysis, wherein the at least one component which promotes hydrolysis is an alkaline component or a filler component.

6. A gum base according to any proceeding claim, wherein the barrier material is selected from oils and fats, and hydrogenates and emulsions thereof.

7. A gum base according to any preceding claim, wherein said gum base composition has increased degradability and/or reduced-stick properties in the presence of the polymer comprising hydrolysable units as compared to in the absence of the polymer comprising hydrolysable units.

8. A chewing gum composition comprising a gum base according to any preceding claim.


**Patentansprüche**

1. Gummibasis, umfassend:

   a) einen hydrophilen Vorläuferbestandteil, umfassend hydrolysierbare Einheiten; und
   b) ein Copolymer eines hydrophilen Monomers mit einem zweiten Monomer, ausgewählt aus Vinylacetat, Isobutylen, Isopren, Butylkautschuk oder Styrolbutadien, wobei das hydrophile Monomer eines oder mehrere ist, ausgewählt aus Acrylsäure, Ethylenglycolmethacrylat, N,N-Dimethylacrylamid, 2-Hydroxyethylacrylat, Acrylamid, N-Isopropylacrylamid, 2-(Dimethylamino) ethylmethacrylat, 2-Acrylamido-2-methylpropansulfonsäure, Ethylenoxid, Ethylenglycol und Propylenglycol; wobei der hydrophile Vorläuferbestandteil mindestens teilweise innerhalb eines Barrierematerials eingekapselt oder dispergiert ist; und
   wobei das Barrierematerial eine Substanz umfasst, die eine nukleophile Gruppe besitzt, die dazu in der Lage ist, mit den hydrolysierbaren Einheiten des hydrophilen Vorläuferbestandteils zu reagieren.

2. Gummibasis nach Anspruch 1, wobei der hydrophile Vorläuferbestandteil mit hydrolysierbaren Einheiten in einer Menge von 0,1 Gew.-% bis 10 Gew.-% der gesamten Gummibasis vorliegt.

3. Gummibasis nach Anspruch 1 oder 2, wobei das Copolymer in einer Menge von 3 Gew.-% bis 95 Gew.-% der gesamten Zusammensetzung vorliegt.

4. Gummibasis nach einem der vorstehenden Ansprüche, ferner einschließlich mindestens eines Bestandteils, ausgewählt aus einem Süßstoff, einem Geschmacksstoff, einem Sinnesstoff und Kombinationen davon; einem Texturmodifizierer; einem Lösungsmittel oder Weichmacher für das Elastomer; einem Emulgator; einem Plastifiziermittel, einem Füllstoff/Volumenmittel; einem Wachs; einem hydrophilen, einem wasserabsorbierenden Polymer; einem Antioxidans; einem Färbemittel; einem Konservierungsmittel; einem Photosensibilisator; einem erwärmenden und/oder prickelnden Mittel; einem rachenschmerzlindernden Mittel; einem Gewürz; einem Kräuter- und/oder pflanzlichen Extrakt, einem zahnbleichenden Mittel; einem atemerfrischenden Mittel; einem Vitamin und/oder Mineral; einem bioaktiven Mittel; Koffein; Nikotin; einem pharmazeutisch aktiven Mittel.

5. Gummibasis nach einem vorstehenden Anspruch, ferner einschließlich mindestens eines Bestandteils, der eine Hydrolyse fördert, wobei die Gummibasis in der Gegenwart des mindestens einen Bestandteils, der eine Hydrolyse fördert, schneller als in der Abwesenheit des mindestens einen Bestandteils, der eine Hydrolyse fördert, abgebaut wird, wobei der mindestens eine Bestandteil, der die Hydrolyse fördert, ein alkalischer Bestandteil oder ein Füllstoffbestandteil ist.

6. Gummibasis nach einem der vorstehenden Ansprüche, wobei das Barrierematerial aus Ölen und Fetten und Hydrierungen und Emulsionen davon ausgewählt ist.

7. Gummibasis nach einem der vorstehenden Ansprüche, wobei die Gummibasiszusammensetzung eine erhöhte Abbaubarkeit und/oder verringerte Klebeeigenschaften in der Gegenwart des Polymers, umfassend hydrolysierbare Einheiten, im Vergleich zu der Abwesenheit des Polymers, umfassend hydrolysierbare Einheiten, aufweist.

8. Kaugummizusammensetzung, umfassend eine Gummibasis nach einem der vorstehenden Ansprüche.

**Revendications**

1. Base de gomme comprenant :

   a) un composant précurseur hydrophile comprenant des unités hydrolysables ; et
   b) un copolymère d'un monomère hydrophile avec un second monomère choisi parmi l'acétate de vinyle, l'isobutylène, l'isoprène, le caoutchouc butyle ou le butadiène styrène, dans laquelle le monomère hydrophile est un ou plusieurs choisis parmi l'acide acrylique, l'acide méthacrylique, le méthacrylate d'éthylène glycol, le N,N-diméthylacrylamide, l'acrylate de 2-hydroxyéthyle, l'acrylamide, le N-isopropylacrylamide, le méthacrylate de 2-(diméthylamino) d'éthyle, l'acide 2-acrylamido-2-méthylpropane sulfonique, l'oxyde d'éthylène, l'éthylène glycol et le propylène glycol ; dans laquelle le composant précurseur hydrophile est au moins partiellement encapsulé ou dispersé dans un matériau barrière ; et
   dans laquelle le matériau barrière comprend une substance qui possède un groupe nucléophile capable de réagir avec les unités hydrolysables du composant précurseur hydrophile.

2. Base de gomme selon la revendication 1, dans laquelle le composant précurseur hydrophile ayant des unités hydrolysables est présent en une quantité de 0,1 % en poids à 10 % en poids de la base de gomme totale.

3. Base de gomme selon la revendication 1 ou 2, dans laquelle le copolymère est présent en une quantité de 3 % en poids à 95 % en poids de la composition totale.

4. Base de gomme selon l'une quelconque des revendications précédentes, incluant en outre au moins un composant choisi parmi un édulcorant, un arôme, un agent sensoriel et des combinaisons de ceux-ci ; un modificateur de texture ; un solvant ou un émollient pour l'élastomère ; un émulsifiant ; un plastifiant, un agent gonflant / de remplissage ; une cire ; un polymère hydrophile, absorbant l'eau ; un antioxydant ; un agent colorant ; un conservateur ; un photosensibilisant ; un agent de réchauffement et/ou de picotement ; un agent apaisant la gorge ; une épice ; une herbe et/ou un extrait d'herbe, un agent blanchissant les dents ; un agent rafraîchissant l'haleine ; une vitamine et/ou un minéral ; un agent bioactif ; la caféine ; la nicotine ; un agent pharmaceutiquement actif.

5. Base de gomme selon l'une quelconque des revendications précédentes, incluant en outre au moins un composant qui favorise l'hydrolyse, dans laquelle la base de gomme se dégrade plus rapidement en présence de l'au moins un composant qui favorise l'hydrolyse qu'en l'absence de l'au moins un composant qui favorise l'hydrolyse, dans laquelle l'au moins un composant qui favorise l'hydrolyse est un composant alcalin ou un composant de remplissage.

6. Base de gomme selon l'une quelconque des revendications précédentes, dans laquelle le matériau barrière est choisi parmi les huiles et graisses, et les hydrogénats et les émulsions de celles-ci.

7. Base de gomme selon l'une quelconque des revendications précédentes, dans laquelle ladite composition de base de gomme a une dégradation accrue et/ou des propriétés d'adhérence réduites en présence du polymère comprenant des unités hydrolysables par comparaison avec en l'absence du polymère comprenant des unités hydrolysables.

8. Composition de chewing-gum comprenant une base de gomme selon l'une quelconque des revendications précé-dentes.

Figure 1

Three days exposure                    Eight days exposure

PVA containing gum base +          Standard gum base + Gantrez
Gantrez

Figure 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5882702 A
- US 2008233233 A
- WO 2008103816 A
- US 4518615 A
- US 2007104829 A
- US 4271197 A, Hopkins
- US 4352822 A, Cherukuri
- US 4497832 A, Cherukuri
- US 92582204
- US 21095405
- US 73468005